# EUROPÄISCHE PATENTSCHRIFT

(11) **EP 1 704 309 B1**
(45) Veröffentlichungstag und Bekanntmachung des Hinweises auf die Patenterteilung: **06.01.2010**
(21) Anmeldenummer: 05700941.7
(22) Anmeldetag: 14.01.2005
(51) Int. Cl.: F02B 33/34, F02B 41/10, F02B 37/10, F02B 37/00, F02B 39/08, F16D 33/16

(54) **TURBO-COMPOUND SYSTEM**
TURBINE COMPOUND SYSTEM
SYSTEME DE TURBORECUPERATION

(30) Priorität: 15.01.2004 DE 102004002215
(43) Veröffentlichungstag der Anmeldung: 27.09.2006
(73) Patentinhaber: Voith Turbo GmbH & Co. KG, 89522 Heidenheim (DE)
(72) Erfinder: KLEY, Markus, 73479 Ellwangen (DE); KAMOSSA, Kai, 74564 Crailsheim (DE); ADLEFF, Kurt, 74564 Crailsheim (DE)
(74) Vertreter: Dr. Weitzel & Partner
(86) Internationale Anmeldenummer: PCT/EP2005/000347
(87) Internationale Veröffentlichungsnummer: WO 2005/068801

(56) Entgegenhaltungen:
- EP-A- 0 272 680
- EP-A- 0 297 287
- EP-A- 0 301 547

## Beschreibung

Die Erfindung betrifft ein Turbo-Compound-System, das heißt ein System zur wirkungsgraderhöhenden Übertragung von Abgasenergie eines Verbrennungsmotors, welcher in einem Antriebsstrang angeordnet ist, über eine Abgasnutzturbine und eine hydrodynamische Kupplung auf die Kurbelwelle des Verbrennungsmotors. Das System, welches die Erfindung betrifft, könnte auch als Turbo-Compound-Retarder-System bezeichnet werden, da es zugleich eine Retarderfunktion aufweist, das heißt eine Bremswirkung auf die Kurbelwelle des Verbrennungsmotors aufbringen kann, wenn dies gefordert wird.

Turbo-Compound-Systeme sowie Turbo-Compound-Retarder-Systeme sind dem Fachmann bekannt. Insbesondere die letzteren weisen in der Regel eine hydrodynamische Kupplung auf, die zur Drehmomentübertragung zwischen der Abgasnutzturbine und der Kurbelwelle des Verbrennungsmotors dient. Um die beschriebene Bremsfunktion zur Verfügung zu stellen, wird dabei in der Regel entweder ein Schaufelrad der hydrodynamischen Kupplung mechanisch festgesetzt, so dass aus der hydrodynamischen Kupplung funktionell ein Retarder wird, oder die Abgasnutzturbine wird als Kompressor betrieben, siehe beispielsweise die Patentschrift US 5 884 482. Bezüglich des zuletzt genannten Systems ist es auch bekannt, die Drehrichtung der Abgasnutzturbine im Bremsbetrieb umzukehren, um ein größeres Bremsmoment zu erzeugen, siehe beispielsweise das US-Patent mit der Nummer US 4 748 812.

Obwohl diese Systeme eine gewisse Bremswirkung im Bremsbetrieb erreichen, hat sich in der Praxis gezeigt, dass die Schaltung der Abgasnutzturbine als Kompressor kein zufriedenstellendes gleichmäßiges Bremsmoment auf die Kurbelwelle aufgebracht hat. Bei den Systemen mit festgestelltem Schaufelrad der hydrodynamischen Kupplung hingegen ist das im Retarderbetrieb der hydrodynamischen Kupplung erzeugte Bremsmoment, mittels welchem die Kurbelwelle des Verbrennungsmotors abgebremst wird, stark drehzahlabhängig und somit ebenso ungleichförmig.

Die Dokumente EP 0 301 547 A, EP 0 297 287 A und EP 0 272 680 A beschreiben jeweils Turbo-Compound-Systeme, bei welchen die Abgasnutzturbine im Bremsbetrieb in ihrer Drehrichtung umgeschaltet wird, um als Luftkompressor zu arbeiten. Aufgrund der Umschaltung der Drehrichtung der Abgasnutzturbine erfolgt auch eine Umschaltung der Drehrichtung von beiden Schaufelrädern der vorgeschalteten hydrodynamischen Kupplung.

Der Erfindung liegt die Aufgabe zugrunde, ein Turbo-Compound-System darzustellen, welches ein besonders gleichmäßiges und hohes Bremsmoment im Schubbetrieb des Verbrennungsmotors, insbesondere genau vorhersagbar und regelbar, zur Verfügung stellt.

Die erfindungsgemäße Aufgabe wird durch ein Turbo-Compound-System mit den Merkmalen von Anspruch 1 gelöst. Die Unteransprüche beschreiben besonders zweckmäßige und vorteilhafte Weiterbildungen der Erfindung.

Das erfindungsgemäße Turbo-Compound-System umfasst einen Verbrennungsmotor mit einer angetriebenen Kurbelwelle sowie eine im Abgasstrom des Verbrennungsmotors angeordnete Abgasnutzturbine. In die Triebverbindung zwischen der Abgasnutzturbine und der Kurbelwelle ist eine hydrodynamische Kupplung geschaltet, welche ein Primärrad und ein Sekundärrad umfasst, die miteinander einen Arbeitsraum ausbilden. Der Arbeitsraum ist mit einem Arbeitsmedium, insbesondere Öl, befüllt oder befüllbar, so dass Drehmoment von dem Primärrad auf das Sekundärrad oder von dem Sekundärrad auf das Primärrad übertragen wird, in Abhängigkeit davon, welche Seite, die Primärseite oder die Sekundärseite, von außen angetrieben wird. Im Sinne einer einheitlichen Bezeichnung wird zur Beschreibung der vorliegenden Erfindung das Schaufelrad der hydrodynamischen Kupplung, welches auf der Abgasnutzturbinenseite angeordnet ist und insbesondere in einer direkten mechanischen Triebverbindung mit der Abgasnutzturbine steht, als Primärrad bezeichnet. Entsprechend ist das Sekundärrad im Sinne der vorliegenden Erfindung das Schaufelrad der hydrodynamischen Kupplung, welches auf der Kurbelwellenseite angeordnet ist und insbesondere in einer direkten mechanischen Triebverbindung mit der Kurbelwelle steht oder in eine solche schaltbar ist.

Im sogenannten "Turbokupplungsbetrieb", auch "Turbo-Compound-Betrieb", wird die Abgasnutzturbine durch den Abgasstrom des Verbrennungsmotors angetrieben, d.h. die Abgasnutzturbine setzt Abgasenergie in eine Drehbewegung um, und diese Antriebsleistung wird von dem Primärrad der hydrodynamischen Kupplung, welches in einer Triebverbindung mit dem Abgasnutzturbine, d.h. dem Turbinenrad der Abgasnutzturbine steht, über das Arbeitsmedium im Arbeitsraum der hydrodynamischen Kupplung auf das Sekundärrad und weiter auf die Kurbelwelle des Antriebsmotors übertragen, welche in einer Triebverbindung mit dem Sekundärrad steht. Insofern unterscheidet sich die Ausführung der vorliegenden Erfindung nicht vom Stand der Technik.

Das erfindungsgemäße Turbo-Compound-System weist jedoch zusätzlich ein Schaltmittel zur Umkehr der Drehrichtung des Primärrads oder des Sekundärrads der hydrodynamischen Kupplung auf, so dass im sogenannten "Retarderbetrieb", das heißt in einem Betriebszustand des Turbo-Compound-Systems, in welchem eine Bremsleistung auf die Kurbelwelle des Verbrennungsmotors aufgebracht werden soll, insbesondere wenn sich dieser im Schubbetrieb befindet, das Primärrad und das Sekundärrad der hydrodynamischen Kupplung gegensinnig zueinander umlaufen und somit einen sogenannten Gegenlaufretarder ausbilden.

Die Vorteile der Gegenlaufretarderfunktion des erfindungsgemäßen Turbo-Compound-Systems sind die Entwicklung eines besonders großen Bremsmomentes sowie eines gleichmäßigen beziehungsweise im Vergleich zum Stand der Technik gleichmäßigeren Bremsmomentverlaufs über einen großen Drehzahlbereich der hydrodynamischen Kupplung, beispielsweise mit Bezug auf die Eingangsdrehzahl der hydrodynamischen Kupplung.

Das erfindungsgemäße Schaltmittel kann in verschiedenen Ausführungen vorgesehen sein. Gemäß einer ersten Ausführung bewirkt das erfindungsgemäße Schaltmittel eine Drehrichtungsumkehr des Turbinenrads der Abgasnutzturbine, so dass das Primärrad der hydrodynamischen Kupplung gegenüber dem "Kupplungsbetrieb" umgekehrt wird. Hierzu ist das erfindungsgemäße Schaltmittel in Form einer Strömungsleitvorrichtung ausgebildet, beispielsweise in Form eines Leitapparates beziehungsweise eines Leitgitters der Abgasnutzturbine. Durch dieses Leitgitter wird gemäß der beschriebenen Ausführung die Anströmung des Turbinenrads der Abgasnutzturbine derart geändert, dass sich die gewünschte Drehrichtungsumkehr einstellt.

Gemäß einer zweiten Ausführung der Erfindung umfasst das Schaltmittel ein Schaltgetriebe beziehungsweise ist das Schaltmittel in Form eines Schaltgetriebes ausgebildet. Das Schaltgetriebe kann dabei gemäß einer vorteilhaften Ausführung ein Umkehrgetriebe sein, welches in der Triebverbindung zwischen der Kurbelwelle und dem Sekundärrad der hydrodynamischen Kupplung angeordnet ist. In einem ersten Schaltzustand (Kupplungsbetrieb) treibt das Sekundärrad über das Schaltgetriebe die Kurbelwelle des Verbrennungsmotors an, wobei es in einer ersten Richtung umläuft. In einem zweiten Schaltzustand treibt die Kurbelwelle über das Schaltgetriebe das Sekundärrad an (Retarderbetrieb), wobei in diesem Zustand das Sekundärrad durch eine entsprechende Umschaltung des als Umkehrgetriebe ausgebildeten Schaltgetriebes mit einer zweiten Drehrichtung umläuft, welche der ersten Drehrichtung entgegengesetzt ist.

Gemäß einer alternativen Ausführungsform ist ein entsprechendes Umkehrgetriebe in der Triebverbindung zwischen der Abgasnutzturbine und dem Primärrad der hydrodynamischen Kupplung angeordnet. Entsprechend läuft das Primärrad der hydrodynamischen Kupplung in den beiden Schaltstellungen des Umkehrgetriebes in zueinander entgegengesetzten Richtungen um.

Gemäß einer anderen Ausführung des erfindungsgemäßen Turbo-Compound-Systems ist ein Schaltgetriebe parallel zur hydrodynamischen Kupplung angeordnet und umfasst eine Schaltkupplung, mittels welcher das Primärrad und das Sekundärrad der hydrodynamischen Kupplung in eine solche mechanische Triebverbindung schaltbar sind, dass die beiden Räder sich entgegengesetzt zueinander drehen. Somit wird im Retarderbetrieb das Sekundärrad der hydrodynamischen Kupplung von der Kurbelwelle in eine erste Richtung angetrieben, während das Primärrad ebenfalls (mittelbar) durch die Kurbelwelle in eine zweite, entgegengesetzte Richtung angetrieben wird, so dass die hydrodynamische Kupplung als Gegenlaufretarder arbeitet.

Die parallel zur hydrodynamischen Kupplung angeordnete Schaltkupplung kann als Lamellenkupplung oder ebenfalls als hydrodynamische Kupplung ausgeführt sein. Das Schaltgetriebe ist insbesondere in Form eines Planetengetriebes mit einer Schaltkupplung ausgeführt.

Gemäß einer vorteilhaften Ausführungsform laufen das Primärrad und das Sekundärrad im Retarderbetrieb in entgegengesetzte Drehrichtungen mit im Betrag voneinander verschiedenen Drehzahlen um. Hierdurch wird eine besonders hohe Bremsleistung erreicht. Alternativ ist es möglich, das Primärrad und das Sekundärrad im Retarderbetrieb in entgegengesetzte Drehrichtungen mit im Betrag gleichen Drehzahlen umlaufen zu lassen.

Die Erfindung soll nachfolgend anhand verschiedener Ausführungsbeispiele und der Figuren näher erläutert werden.

Es zeigen:
- Figur 1: eine erste Ausführungsform der Erfindung mit einer Anströmungsänderung der Abgasnutzturbine durch eine Leitgitterverstellung des Abgasnutzturbinenleitgitters im Turbokupplungsbetrieb und im Retarderbetrieb;
- Figur 2: eine zweite Ausführungsform der Erfindung mit einem Schaltgetriebe, umfassend eine Schaltkupplung, zwischen dem Primärrad und dem Sekundärrad der hydrodynamischen Kupplung.

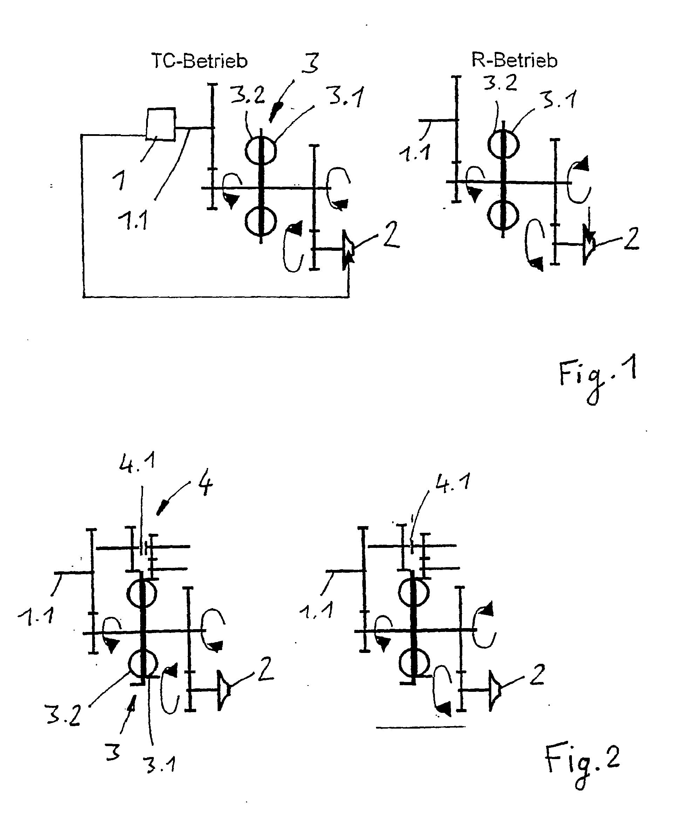

In der Figur 1 erkennt man ein erfindungsgemäßes Turbo-Compound-System mit einem Verbrennungsmotor 1, dessen Kurbelwelle 1.1 im Turbokupplungsbetrieb (auch Turbo-Compound-Betrieb genannt) über die hydrodynamische Kupplung 3, deren Arbeitsraum zwischen dem Primärrad 3.1 und dem Sekundärrad 3.2 mit Arbeitsmedium befüllt ist, zusätzlich von der im Abgasstrom des Verbrennungsmotors 1 angeordneten Abgasnutzturbine 2 angetrieben wird. Dabei ist beidseits der hydrodynamischen Kupplung 3, das heißt zwischen der Kurbelwelle 1.1 und dem Sekundärrad 3.2 sowie der Abgasnutzturbine 2 und dem Primärrad 3.1 jeweils ein Übersetzungsgetriebe angeordnet. Wie man sieht, führt die gezielte Zuführung des Abgasstromes auf die Abgasnutzturbine bzw. durch das Leitgitter auf das Turbinenrad der Abgasnutzturbine zu einer ersten Drehrichtung des Primärrades 3.1 der hydrodynamischen Kupplung im Turbokupplungsbetrieb.

Im Retarderbetrieb hingegen ist die Führung des Abgasstromes derart gegenüber dem Turbokupplungsbetrieb umgeschaltet worden, dass sich die Drehrichtung der Abgasnutzturbine 2 und damit des Primärrads 3.1 der hydrodynamischen Kupplung 3 umgekehrt hat. Dementsprechend laufen im Retarderbetrieb das Primärrad 3.1 und das Sekundärrad 3.2 gegensinnig um, während diese beiden Räder 3.1, 3.2 im Turbokupplungsbetrieb, wie dargestellt, stets gleichsinnig umlaufen.

Die Umkehrung der Drehrichtung der Abgasnutzturbine 2 kann entweder durch Verstellung des Leitgitters der Abgasnutzturbine oder durch eine Umschaltung der Zuführung des Abgasstroms, beispielsweise von einem ersten Einlass auf einen zweiten Einlass, erreicht werden.

In der Figur 2 ist eine alternative Ausgestaltung eines Schaltmittels zur Umkehr der Drehrichtung des Primärrades 3.1 der hydrodynamischen Kupplung 3 im Retarderbetrieb gegenüber dem Turbokupplungsbetrieb gezeigt. Wie man sieht, ist parallel zur hydrodynamischen Kupplung 3 ein Schaltgetriebe 4 angeordnet, welches eine Schaltkupplung 4.1 umfasst. Im Turbokupplungsbetrieb ist die Schaltkupplung in den geöffneten Zustand geschaltet, so dass keine mechanische Triebverbindung zwischen dem Primärrad 3.1 und dem Sekundärrad 3.2 der hydrodynamischen Kupplung 3 besteht, und das Sekundärrad 3.2 von dem Primärrad 3.1 ausschließlich über die Kreislaufströmung des Arbeitsmediums im Arbeitsraum der hydrodynamischen Kupplung angetrieben wird, so dass beide Räder 3.1, 3.2 gleichsinnig umlaufen. Im Retarderbetrieb hingegen ist die Schaltkupplung 4.1 geschlossen, so dass das Primärrad 3.1 der hydrodynamischen Kupplung von der Kurbelwelle 1.1 mit einer der Drehrichtung des Sekundärrades 3.2 entgegengesetzten Drehrichtung angetrieben wird. Zugleich wird somit die Abgasnutzturbine in eine der Drehrichtung im Turbokupplungsbetrieb entgegengesetzten Richtung angetrieben und arbeitet somit als Kompressor beziehungsweise "Luftpumpe", was ein weiteres Bremsmoment zur Abbremsung der Kurbelwelle 1.1 beiträgt.

Somit erfolgt bei der in der Figur 2 dargestellten Ausführung die Drehmomentübertragung im Turbokupplungsbetrieb von der Abgasnutzturbine 2 auf die Kurbelwelle 1.1 rein hydrodynamisch, während im Retarderbetrieb die beiden Räder - Primärrad 3.1 und Sekundärrad 3.2 - der hydrodynamischen Kupplung mechanisch entgegengesetzt zueinander angetrieben werden, und die hydrodynamische Kupplung 3 die Funktion eines Gegenlaufretarders ausführt.

## Patentansprüche

1. Turbo-Compound-System,
mit einer von einem Verbrennungsmotor (1) angetriebenen Kurbelwelle (1.1);
mit einer im Abgasstrom des Verbrennungsmotors (1) angeordneten Abgasnutzturbine (2);
mit einer hydrodynamischen Kupplung (3), umfassend ein Primärrad (3.1) und ein Sekundärrad (3.2), welche miteinander einen mit einem Arbeitsmedium befüllbaren oder befüllten Arbeitsraum (3.3) ausbilden, wobei die hydrodynamische Kupplung (3) derart in einer Triebverbindung zwischen der Kurbelwelle (1.1) und der Abgasnutzturbine (2) angeordnet ist, dass bei befülltem Arbeitsraum (3.3) der hydrodynamischen Kupplung (3) bei von dem Abgasstrom angetriebener Abgasnutzturbine (2) Antriebsleistung von der Abgasnutzturbine (2) auf die Kurbelwelle (1.1) übertragen wird;
**dadurch gekennzeichnet, dass**
ein Schaltmittel zur Umkehr der Drehrichtung des Primärrads (3.1) oder des Sekundärrads (3.2) der hydrodynamischen Kupplung (3) vorgesehen ist, so dass das Primärrad (3.1) und das Sekundärrad (3.2) der hydrodynamischen Kupplung (3) gegensinnig zueinander umlaufen und einen Gegenlaufretarder ausbilden.

2. Turbo-Compound-System gemäß Anspruch 1, **dadurch gekennzeichnet, dass** das Schaltmittel eine Strömungsleitvorrichtung im Abgasstrom umfasst, welche zur Umkehr der Drehrichtung des Primärrads (3.1), welches abgasnutzturbinenseitig in der hydrodynamischen Kupplung (3) angeordnet ist, die Strömungsrichtung des Abgases derart ändert, dass sich die Drehrichtung der Abgasnutzturbine (2) umkehrt.

3. Turbo-Compound-System gemäß Anspruch 2, **dadurch gekennzeichnet, dass** die Strömungsleitvorrichtung ein Leitgitter oder einen Leitapparat der Abgasnutzturbine (2) umfasst.

4. Turbo-Compound-System gemäß Anspruch 1, **dadurch gekennzeichnet, dass** das Schaltmittel ein Schaltgetriebe (4) umfasst.

5. Turbo-Compound-System gemäß Anspruch 4, **dadurch gekennzeichnet, dass** das Schaltgetriebe (4) in Form eines Umkehrgetriebes ausgeführt ist, welches in der Triebverbindung zwischen der Kurbelwelle (1.1) und dem Sekundärrad (3.2), das kurbelwellenseitig in der hydrodynamischen Kupplung (3) angeordnet ist, positioniert ist.

6. Turbo-Compound-System gemäß Anspruch 4, **dadurch gekennzeichnet, dass** das Schaltgetriebe (4) in Form eines Umkehrgetriebes ausgeführt ist, welches in der Triebverbindung zwischen der Abgasnutzturbine (2) und dem Primärrad (3.1), das abgasnutzturbinenseitig in der hydrodynamischen Kupplung (3) angeordnet ist, positioniert ist.

7. Turbo-Compound-System gemäß Anspruch 4, **dadurch gekennzeichnet, dass** das Schaltgetriebe (4) parallel zur hydrodynamischen Kupplung (3) angeordnet ist und eine Schaltkupplung (4.1) umfasst, mittels welcher das Primärrad (3.1) und das Sekundärrad (3.2) der hydrodynamischen Kupplung (3) in eine mechanische Triebverbindung mit gegensinniger Drehrichtung schaltbar sind.

8. Turbo-Compound-System gemäß Anspruch 7, **dadurch gekennzeichnet, dass** die Schaltkupplung (4.1) als Lamellenkupplung ausgeführt ist.

9. Turbo-Compound-System gemäß Anspruch 7, **dadurch gekennzeichnet, dass** die Schaltkupplung (4.1) als hydrodynamische Kupplung ausgeführt ist.

10. Turbo-Compound-System gemäß einem der Ansprüche 7 bis 9, **dadurch gekennzeichnet, dass** das Schaltgetriebe (4) als Planetengetriebe mit Schaltkupplung (4.1) ausgeführt ist.

## Claims

1. A turbo-compound system, comprising a crankshaft (1.1) driven by an internal combustion engine (1), an exhaust-gas utilization turbine (2) arranged in the exhaust-gas flow of the internal combustion engine (1), a hydrodynamic coupling (3), comprising a primary wheel (3.1) and a secondary wheel (3.2) which jointly form a working chamber (3.3) which is or can be filled with a working medium, with the hydrodynamic coupling (3) being arranged in a drive connection between the crankshaft (1.1) and the exhaust-gas utilization turbine (2) that when the exhaust-gas utilization turbine (2) is driven by the exhaust-gas flow drive power is transferred from the exhaust-gas utilization turbine (2) to the crankshaft (1.1) when the working chamber (3.3) of the hydrodynamic coupling (3) is filled, **characterized in that** one switching means is provided for reversing the direction of rotation of the primary wheel (3.1) or the secondary wheel (3.2) of the hydrodynamic coupling (3), so that the primary wheel (3.1) and the secondary wheel (3.2) of the hydrodynamic coupling (3) revolve in opposite directions with respect to each other and form a counter-rotation retarder.

2. A turbo-compound system according to claim 1, **characterized in that** the switching means comprises a flow guide apparatus in the exhaust-gas flow which changes the direction of flow of the exhaust gas for reversing the direction of rotation of the primary wheel (3.1) which is arranged in the hydrodynamic coupling (3) on the side of the exhaust-gas utilization turbine in such a way that the direction of rotation of the exhaust-gas utilization turbine (2) will be reversed.

3. A turbo-compound system according to claim 2, **characterized in that** the flow guide apparatus comprises a guide lattice or a guide apparatus of the exhaust-gas utilization turbine (2).

4. A turbo-compound system according to claim 1, **characterized in that** the switching means comprises a gearbox (4).

5. A turbo-compound system according to claim 4, **characterized in that** the gearbox (4) is arranged in the form of a reversing gearbox which is disposed in the drive connection between the crankshaft (1.1) and the secondary wheel (3.2) which is arranged in the hydrodynamic coupling (3) on the side of the crankshaft.

6. A turbo-compound system according to claim 4, **characterized in that** the gearbox (4) is arranged in the form of a reversing gearbox which is disposed in the drive connection between the exhaust-gas utilization turbine (2) and the primary wheel (3.1) which is arranged in the hydrodynamic coupling (3) on the side of the exhaust-gas utilization turbine.

7. A turbo-compound system according to claim 4, **characterized in that** the gearbox (4) is arranged parallel to the hydrodynamic coupling (3) and comprises a clutch (4.1) by means of which the primary wheel (3.1) and the secondary wheel (3.2) of the hydrodynamic coupling (3) can be switched to a mechanical drive connection with an opposite direction of rotation.

8. A turbo-compound system according to claim 7, **characterized in that** the clutch (4.1) is arranged as a multi-disk clutch.

9. A turbo-compound system according to claim 7, **characterized in that** the clutch (4.1) is arranged as a hydrodynamic coupling.

10. A turbo-compound system according to one of the claims 7 to 9, **characterized in that** the gearbox (4) is arranged as a planetary gear with a clutch (4.1).

## Revendications

1. Système de turbocompresseur compound,
avec un vilebrequin (1.1) entraîné par un moteur à combustion interne (1); avec une turbine d'utilisation des gaz d'échappement (2) placée dans le flux de gaz d'échappement du moteur à combustion interne (1) ;
avec un accouplement hydrodynamique (3) comprenant une roue primaire (3.1) et une roue secondaire (3.2) qui forment ensemble un espace de travail (3.3) rempli ou pouvant être rempli d'un fluide de travail, l'accouplement hydrodynamique (3) étant en liaison motrice entre le vilebrequin (1.1) et la turbine d'utilisation des gaz d'échappement (2) de telle sorte que lorsque l'espace de travail (3.3) de l'accouplement hydrodynamique (3) est rempli, la turbine d'utilisation des gaz d'échappement (2) étant entraînée par le flux de gaz d'échappement, une puissance d'entraînement est transmise de la turbine d'utilisation des gaz d'échappement (2) au vilebrequin (1.1);
**caractérisé en ce qu'**il est prévu un moyen de commutation pour inverser le sens de rotation de la roue primaire (3.1) ou de la roue secondaire (3.2) de l'accouplement hydrodynamique (3), de sorte que la roue primaire (3.1) et la roue secondaire (3.2) de l'accouplement hydrodynamique (3) tournent en sens inverse l'une de l'autre et forment un retardateur à rotation contraire.

2. Système de turbocompresseur compound selon la revendication 1,
**caractérisé en ce que** le moyen de commutation comprend un dispositif de guidage de l'écoulement dans le flux de gaz d'échappement, qui modifie le sens d'écoulement des gaz d'échappement pour inverser le sens de rotation de la roue primaire (3.1) disposée du côté de la turbine d'utilisation des gaz d'échappement dans l'accouplement hydrodynamique (3), de telle façon que le sens de rotation de la turbine d'utilisation des gaz d'échappement (2) s'inverse.

3. Système de turbocompresseur compound selon la revendication 2,
**caractérisé en ce que** le dispositif de guidage de l'écoulement comprend une grille de guidage ou un appareillage de guidage de la turbine d'utilisation des gaz d'échappement (2).

4. Système de turbocompresseur compound selon la revendication 1,
**caractérisé en ce que** le moyen de commutation comprend un engrenage à changement de rapports (4).

5. Système de turbocompresseur compound selon la revendication 4,
**caractérisé en ce que** l'engrenage à changement de rapports (4) est réalisé sous la forme d'un engrenage inverseur qui est positionné dans la liaison motrice entre le vilebrequin (1.1) et la roue secondaire (3.2), laquelle est disposée du côté du vilebrequin dans l'accouplement hydrodynamique (3).

6. Système de turbocompresseur compound selon la revendication 4,
**caractérisé en ce que** l'engrenage à changement de rapports (4) est réalisé sous la forme d'un engrenage inverseur qui est positionné dans la liaison motrice entre la turbine d'utilisation des gaz d'échappement (2) et la roue primaire (3.1), laquelle est disposée du côté de la turbine d'utilisation des gaz d'échappement dans l'accouplement hydrodynamique (3).

7. Système de turbocompresseur compound selon la revendication 4,
**caractérisé en ce que** l'engrenage à changement de rapports (4) est disposé parallèlement à l'accouplement hydrodynamique (3) et comprend un embrayage (4.1) au moyen duquel la roue primaire (3.1) et la roue secondaire (3.2) de l'accouplement hydrodynamique (3) peuvent être embrayées dans une liaison motrice mécanique à sens de rotation contraire.

8. Système de turbocompresseur compound selon la revendication 7,
**caractérisé en ce que** l'embrayage (4.1) est réalisé comme un embrayage à disques multiples.

9. Système de turbocompresseur compound selon la revendication 7,
**caractérisé en ce que** l'embrayage (4.1) est réalisé comme un accouplement hydrodynamique.

10. Système de turbocompresseur compound selon l'une des revendications 7 à 9, **caractérisé en ce que** l'engrenage à changement de rapports (4) est réalisé comme un engrenage à train planétaire avec un embrayage (4.1).
